# EUROPÄISCHE PATENTANMELDUNG

(11) **EP 2 146 053 A1**
(43) Veröffentlichungstag der Anmeldung: **20.01.2010**
(21) Anmeldenummer: 08012959.6
(22) Anmeldetag: 17.07.2008
(51) Int. Cl.: F01D 5/20, F01D 5/14, F01D 11/08

(54) **Axialturbomaschine mit geringen Spaltverlusten**

(71) Anmelder: Siemens Aktiengesellschaft, 80333 München (DE); Deutsches Zentrum für Luft- und Raumfahrt e.V. (DLR), 51147 Köln (DE)
(72) Erfinder: Aulich, Marcel, 50674 Köln (DE); Cornelius, Christian, Dr., 45549 Sprockhövel (DE); Kröger, Georg, 50823 Köln (DE)

(57) **Zusammenfassung**

Eine Axialturbomaschine (1) weist ein Laufschaufelgitter, das von Laufschaufeln (2) mit jeweils einer Vorderkante (8) und einer radial außenliegenden, freistehenden Schaufelspitze (15) gebildet ist, und eine das Laufschaufelgitter ummantelnde Ringraumwandung (13) mit einer Ringrauminnenseite (14) auf, mit der die Ringraumwandung unmittelbar benachbart zu den Schaufelspitzen unter Ausbildung eines Radialspalts (16) zwischen der Einhüllenden der Schaufelspitzen und der Ringrauminnenseite angeordnet ist, wobei die Laufschaufeln an ihrer Schaufelspitze im Bereich ihrer Vorderkanten jeweils eine Radialerhebung (18) aufweisen sowie die Ringraumwandung an der Ringrauminnenseite eine umlaufende Radialvertiefung (17) aufweist, die im Radialabstand zu der Einhüllenden der Schaufelspitzen angeordnet ist, so dass entlang der Hauptdurchströmungsrichtung der Axialturbomaschine der Verlauf der Radialerhebungen an deren dem Radialspalt zugewandten Seiten dem Verlauf der Radialvertiefung nachempfunden ist.

## Beschreibung

Die Erfindung betrifft eine Axialturbomaschine, die geringe Spaltverluste hat.

Eine Axialturbomaschine weist ein Gehäuse und einen Rotor auf, der von dem Gehäuse umgeben ist. Der Rotor weist eine Nabenkontur auf, die zusammen mit der Innenkontur des Gehäuses einen Strömungskanal durch die Axialturbomaschine bildet. Der Rotor weist eine Mehrzahl von Rotorstufen auf, die jeweils von einem Laufschaufelgitter gebildet sind. Die Laufschaufelgitter weisen eine Mehrzahl von Laufschaufeln auf, die jeweils mit ihrem einen Ende nabenseitig an dem Rotor befestigt sind und mit ihrem anderen Ende radial nach außen zeigen. An diesem anderen Ende der Laufschaufel ist eine Schaufelspitze ausgebildet, die der Innenseite des Gehäuses zugewandt und unmittelbar benachbart angeordnet ist. Der Abstand zwischen jeder Schaufelspitze und der Innenseite des Gehäuses ist als ein Radialspalt ausgebildet, der derart dimensioniert ist, dass einerseits die Schaufelspitzen beim Betrieb der Axialturbomaschine an das Gehäuse nicht anstreifen und andererseits die beim Betrieb der Axialturbomaschine sich einstellende Leckageströmung durch den Radialspalt möglichst gering ist. Damit die Axialturbomaschine einen hohen Wirkungsgrad hat, ist es wünschenswert, dass die Leckageströmung durch den Radialspalt möglichst gering ist.

Ist die Axialturbomaschine in einem Flugtriebwerk eingebaut, ist das Gehäuse filigran konstruiert, um ein möglicht geringes Gewicht zu haben. Dagegen ist der Rotor massiv konstruiert, um den Druck- und Temperaturbeanspruchungen beim Betrieb der Axialturbomaschine standhalten zu können. Die Laufschaufeln sind im Vergleich zu dem Rotor weniger massiv ausgeführt und sind an den Rotor montiert.

Beim Betrieb der Axialturbomaschine stehen die Innenseite des Gehäuses die Laufschaufeln mit heißem Gas in Kontakt, wobei das Gehäuse an seiner Innenseite einen großflächigen Kontakt mit dem heißen Gas hat. Dadurch, dass das Gehäuse filigraner als der Rotor ausgebildet ist, erwärmt sich der Rotor langsamer als das Gehäuse. Dies hat zur Folge, dass zum An-und Abfahren der Axialturbomaschine der Rotor und das Gehäuse unterschiedliche Wärmeausdehnungsgeschwindigkeiten haben, so dass sich beim An- und Abfahren der Axialturbomaschine die Höhe des Radialspalts, der zwischen den Schaufelspitzen der Laufschaufeln und der Innenseite des Gehäuses ausgebildet ist, ändert. Dabei stellt sich beim Anfahren der Radialspalt als groß und beim Abfahren als klein ein. Damit beim Abfahren die Schaufelspitzen der Laufschaufeln nicht an das Gehäuse anstreifen und beschädigt werden, ist der Radialspalt mit einer derart dimensionierten Minimalhöhe versehen, dass beim Abfahren der Axialturbomaschine die Schaufelspitzen das Gehäuse so gut wie nie berühren. Dies hat zur Folge, dass an den Schaufelspitzen ein entsprechend dimensionierter Radialspalt vorgehalten ist. Andererseits soll insbesondere beim Anfahren der Axialturbomaschine der Radialspalt nur so groß ausgebildet sein, dass eine Reduktion der Leistungsdichte und des Wirkungsgrads der Axialturbomaschine hervorgerufen durch die Leckageströmung sich in hinnehmbaren Grenzen hält.

Moderne Laufschaufeln haben eine sehr hohe aerodynamische Effizienz, die durch eine hohe Druckbelastung der Laufschaufeln erreicht ist. Hervorgerufen durch diese hohe Druckbelastung ist die Leckageströmung durch den Radialspalt besonders stark ausgebildet, so dass durch die Leckageströmung der Gesamtwirkungsgrad der Laufschaufel stark beeinträchtigt ist. Insbesondere bei Laufschaufeln mit kleiner Bauhöhe und großen Radialspalten wird etwa 50 % des Gesamtverlusts der Laufschaufeln durch die Leckageströmung verursacht. Eine Reduktion der Leckageströmung bewirkt eine Verbesserung des Gesamtwirkungsgrads der Laufschaufel.

Herkömmlich ist bekannt die Leckageströmung beispielsweise durch eine "active-clearance-control"-Einrichtung zu verringern. Bei der "active-clearance-control"-Einrichtung wird das Gehäuse beim Anfahren gekühlt und beim Abfahren erwärmt, so dass die Wärmeausdehnungsgeschwindigkeit des Gehäuses an die der Laufschaufeln angeglichen ist. Ferner ist eine besondere Formgebung der Schaufelspitzen bekannt, wie beispielsweise das Ausbilden einer klingenförmigen Schaufelspitze, zur Reduktion der Leckageströmung.

Aufgabe der Erfindung ist es, eine Axialturbomaschine zu schaffen, die einen hohen aerodynamischen Wirkungsgrad hat.

Die erfindungsgemäße Axialturbomaschine weist ein Laufschaufelgitter, das von Laufschaufeln mit jeweils einer Vorderkante und einer radial außenliegenden, freistehenden Schaufelspitze gebildet ist, und eine das Laufschaufelgitter ummantelnde Ringraumwandung mit einer Ringrauminnenseite auf, mit der die Ringraumwandung unmittelbar benachbart zu den Schaufelspitzen unter Ausbildung eines Radialspalts zwischen der Einhüllenden der Schaufelspitzen und der Ringrauminnenseite angeordnet ist, wobei die Laufschaufeln an ihren Schaufelspitzen im Bereich ihrer Vorderkanten jeweils eine Radialerhebung aufweisen sowie die Ringraumwandung an der Ringrauminnenseite eine umlaufende Radialvertiefung aufweist, die im Radialabstand zu der Einhüllenden der Schaufelspitzen angeordnet ist, so dass entlang der Hauptdurchströmungsrichtung der Axialturbomaschine der Verlauf der Radialerhebungen an deren dem Radialspalt zugewandten Seiten dem Verlauf der Radialvertiefung nachempfunden ist.

Die Profilierung der Laufschaufel der erfindungsgemäßen Axialturbomaschine kann herkömmlicher Art sein. Die Radialerhebungen verlaufen parallel zu der Radialvertiefung in Hauptdurchströmungsrichtung der Axialturbomaschine, so dass der Radialspalt einen gleichmäßigen und wellenartigen Verlauf hat. Dadurch wird die Leckageströmung, die sich im Betrieb der Axialturbomaschine durch den Radialspalt einstellt, wechselweise beschleunigt und verzögert. Somit in Wechselweise beschleunigt und verzögert wird die Überströmgeschwindigkeit und die Richtung der Leckageströmung so verändert, dass ein Spaltwirbel, der beim Vermischen der Leckageströmung mit der Hauptströmung sich ausbildet, in der Entstehungsphase und im Wachstum gehindert ist. Dadurch wird vorteilhaft erreicht, dass die Strömung durch das Laufschaufelgitter homogen und verlustarm ist, wodurch der Wirkungsgrad des Laufschaufelgitters und somit der Axialturbomaschine hoch ist.

Hervorgerufen durch den verminderten Einfluss der Leckageströmung auf die Hauptströmung ist zusätzlich die Arbeitsumsetzung der Laufschaufel hoch und die Anströmung einer stromab der Laufschaufel liegenden Leitschaufel verbessert. Dadurch ist eine Fehlanströmung dieser Leitschaufel reduziert und/oder die Leitschaufel kann eine einfache Form haben.

Vorteilhaft ist der Massenstrom der Leckageströmung und deren ungünstige Auswirkung auf den Gesamtwirkungsgrad des Laufschaufelgitters reduziert. Dadurch ergibt sich, ohne zusätzliche konstruktive Maßnahmen vorsehen zu müssen, eine verbesserte aerodynamische Güte des Laufschaufelgitters.

Bevorzugt ist der Radialabstand der Radialvertiefung zu der Einhüllenden der Schaufelspitzen entlang der Hauptströmungsrichtung der Axialturbomaschine konstant. Ferner ist es bevorzugt, dass jede Laufschaufel an der Schaufelspitze eine Sehnenlänge hat, wobei im Bereich von deren vorderen Hälfte die Radialerhebung und die Radialvertiefung angesiedelt sind. Außerdem ist es bevorzugt, dass das Maximum der Radialerhebung und der Grund der Radialvertiefung bei 10% bis 30%, bevorzugt bei 20%, der Sehnenlänge von der Vorderkante aus gesehen angesiedelt sind.

Somit ist vorteilhaft die Radialerhebung und die Radialvertiefung im Bereich der höchsten Druckbelastung der Schaufelspitze der herkömmlich profilierten Laufschaufel angesiedelt, so dass die Leckageströmung durch den Radialspalt reduziert ist.

Ferner ist es bevorzugt, dass die Radialvertiefung und die Radialerhebungen derart geformt sind, dass in Hauptdurchströmungsrichtung der Axialturbomaschine der Verlauf des Radialspalts im Wesentlichen gleich weit, wellig, kantenfrei und stufenfrei verläuft.

Insbesondere ist es bevorzugt, dass in Hauptströmungsrichtung der Axialturbomaschine der Verlauf der Radialvertiefung an der Ringrauminnenseite einen ersten Krümmungsabschnitt und einen sich daran anschließenden zweiten Krümmungsabschnitt aufweist, wobei der erste Krümmungsabschnitt von dem zweiten Krümmungsabschnitt mit einem ersten Wendepunkt abgegrenzt ist, so dass die Krümmungen des ersten Krümmungsabschnitts und des zweiten Krümmungsabschnitts unterschiedliche Vorzeichen haben.

Dadurch hat der Spalt entlang der Hauptströmungsrichtung einen gleichmäßigen, nicht abrupt sich ändernden Verlauf, so dass die Strömung im Bereich der Schaufelspitze verlustarm ist.

Außerdem ist es bevorzugt, dass in Hauptdurchströmungsrichtung der Axialturbomaschine der Verlauf der Radialvertiefung an der Ringrauminnenseite einen sich an den zweiten Krümmungsabschnitt anschließenden dritten Krümmungsabschnitt und einen sich daran anschließenden vierten Krümmungsabschnitt aufweist, wobei der zweite Krümmungsabschnitt von dem dritten Krümmungsabschnitt mit einem zweiten Wendepunkt und der dritte Krümmungsabschnitt von dem vierten Krümmungsabschnitt mit einem dritten Wendepunkt abgegrenzt ist, so dass die Krümmungsabschnitte jeweils ein sich abwechselndes Vorzeichen haben.

Bevorzugt ist, dass an wenigstens einem der Wendepunkte der Verlauf eines Abschnitts der Radialvertiefung an der Ringrauminnenseite in Hauptströmungsrichtung der Axialturbomaschine gerade ist.

Alternativ ist es bevorzugt, dass in Hauptdurchströmungsrichtung der Axialturbomaschine der Verlauf der Radialvertiefung an der Ringrauminnenseite einen sich an dem Grund der Radialvertiefung anschließenden Konusabschnitt aufweist.

Dadurch ist ein sanfter Übergang von der Radialvertiefung bzw. den Radialerhebungen stromab zu der Hinterkante der Laufschaufel erreicht, so dass die Strömung im Bereich der Schaufelspitze verlustarm ist.

Es ist bevorzugt, dass in Hauptströmungsrichtung der Axialturbomaschine und von der Vorderkante aus gesehen der erste Wendepunkt bei 5 % bis 15 %, bevorzugt bei 10 %, der Profillänge der Schaufel und/oder der Grund der Radialvertiefung bei 15 % bis 25 %, bevorzugt bei 20 %, der Profillänge der Laufschaufel angesiedelt ist.

Bevorzugt ist die Axialturbomaschine ein Verdichter in einer stationären Gasturbine, in einem Flugtriebwerk, in einem Prozessverdichter, in einem Ventilator, in einem Gebläse, in einer Dampfdruckturbine, in einer hydraulischen Turbine und/oder einer Pumpe.

Im Folgenden wird die Erfindung anhand einer bevorzugten Ausführungsform eines erfindungsgemäßen Axialverdichters anhand der beigefügten schematischen Zeichnungen erläutert. Es zeigen:
Fig. 1 eine Seitenansicht eines Gehäusebereichs einer ersten Ausführungsform des erfindungsgemäßen Axialverdichters,
Fig. 2 eine perspektivische Ansicht einer Laufschaufelspitze der Ausführungsform aus Fig. 1 und
Fig. 3 eine Seitenansicht der ersten und einer zweiten Ausführungsform eines Gehäuses des erfindungsgemäßen Axialverdichters.

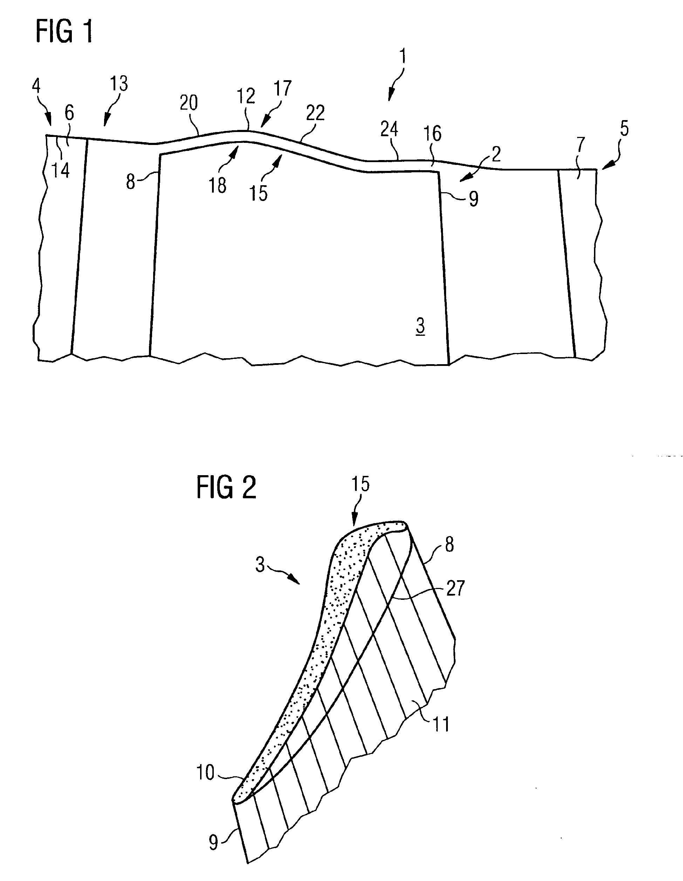

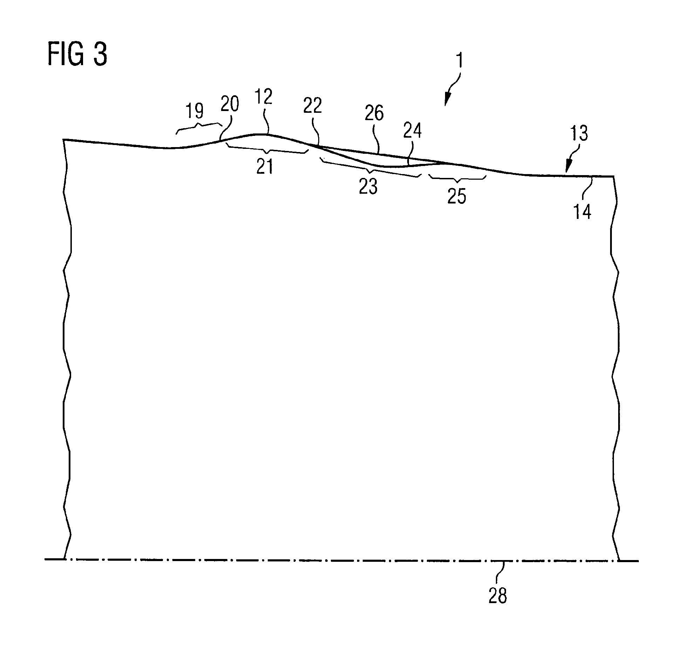

Wie es aus Fig. 1 bis 3 ersichtlich ist, weist ein Axialverdichter 1 einen Rotor 2 auf, der ein Laufschaufelgitter aufweist, das von einer Mehrzahl von Laufschaufeln 3 gebildet ist. In Figuren 1 und 3 gesehen wird der Axialverdichter 1 von links nach rechts durchströmt.

Ferner weist der Axialverdichter 1 stromauf der Laufschaufel 3 einen ersten Stator 4 und stromab der Laufschaufel 3 einen zweiten Stator 5 auf. Der erste Stator 4 ist von einer Mehrzahl von ersten Leitschaufeln 6 und der zweite Stator 5 ist von einer Mehrzahl von zweiten Leitschaufeln 7 gebildet.

Die Laufschaufel 3 weist an ihrem stromauf gewandten Ende eine Vorderkante 8 und an ihrem stromab gewandten Ende eine Hinterkante 9 auf, wobei die eine Seite zwischen der Vorderkante 8 und der Hinterkante 9 die Druckseite 10 und die andere Seite zwischen der Vorderkante 8 und der Hinterkante 9 die Saugseite 11 der Laufschaufel 3 ist.

Die Laufschaufel 3 ist radial außenseitig von einer Ringraumwandung 13 umgeben, wobei die Ringraumwandung 13 eine Ringrauminnenseite 14 aufweist, die der Laufschaufel 3 zugewandt ist. Die Laufschaufel 3 ist an ihrem radial innen liegenden Längsende befestigt und mit ihrem radial außen liegenden Längsende freistehend, wobei an dem freistehenden Ende eine Schaufelspitze 15 ausgebildet ist. Zwischen der Ringrauminnenseite 14 und der Schaufelspitze 15 ist ein Spalt 16 vorgesehen.

Die Schaufelspitze 15 ist an ihrer der Ringrauminnenseite 14 zugewandten Seite mit einer Radialerhebung 18 versehen, deren maximale Radialerstreckung bei 20 % der Sehnenlänge der Schaufel 3 angesiedelt ist. Dem Verlauf der Schaufelspitze 15 folgend ist in der Ringraumwandung 13 an der Ringrauminnenseite 14 eine Radialvertiefung 17 vorgesehen, die in Fig. 1 und 3 gesehen von links nach rechts parallel zu der Radialerhebung 18 verläuft. Die Radialvertiefung 17 weist einen Grund 12 auf, der radial außerhalb auf der Höhe der maximalen Radialerstreckung der Radialerhebung 18 angeordnet ist.

Die Radialvertiefung 17 ist in der Ringraumwandung 13 umlaufend ausgebildet. Dadurch kann, wenn der Rotor 2 um die Drehachse 28 sich dreht, jede Laufschaufel 3 mit ihrer Radialerhebung 18 in die Radialvertiefung 17 eingreifend rotieren.

In Hauptströmungsrichtung des Axialverdichters 1 gesehen ist die Radialvertiefung 17 und analog dazu die Radialerhebung 18 gemäß einer ersten Ausführungsform von vier Krümmungsabschnitten 19, 21, 23, 25 gebildet, wobei die Krümmungsabschnitte 19, 21, 23, 25 jeweils eine Krümmung haben, wobei das Vorzeichen der Krümmungen von Krümmungsabschnitt zu Krümmungsabschnitt wechselt. Die Krümmungsabschnitte 19, 21, 23, 25 sind hintereinander liegend angeordnet, wobei der erste Krümmungsabschnitt 19 von dem zweiten Krümmungsabschnitt 21 durch einen ersten Wendepunkt 20 abgegrenzt ist. Ferner ist der zweite Krümmungsabschnitt 22 von dem dritten Krümmungsabschnitt 23 durch einen zweiten Wendepunkt 22 abgetrennt. Der dritte Krümmungsabschnitt 23 ist von dem vierten Krümmungsabschnitt 25 durch einen dritten Wendepunkt 24 abgegrenzt. Durch die hintereinander liegende Anordnung der Krümmungsabschnitte 19, 21, 23, 25 und der dazwischen liegenden Wendepunkte 20, 22, 24 ist der Spalt 16 zwischen der Schaufelspitze 15 und der Ringrauminnenseite 14 wellenartig ausgebildet.

In Fig. 2 ist mit der Linie 27 die Radialabgrenzung einer herkömmlichen Schaufelspitze dargestellt, so dass der erfindungsgemäße radiale Überstand hervorgerufen durch das Vorsehen der Radialerhebung 18 deutlich wird.

In Fig. 3 ist der Verlauf der Ringrauminnenseite 14 in Relation zu einer Drehachse 28 des Axialverdichters 1 gemäß der ersten Ausführungsform gezeigt. Ferner ist in Fig. 3 eine zweite Ausführungsform des Axialverdichters 1 dargestellt, der die Ringrauminnenseite (14) ab dem zweiten Wendepunkt 22 mit einem Konusabschnitt 26 statt dem zweiten Krümmungsabschnitt 22, dem dritten Krümmungsabschnitt 23 und dem vierten Krümmungsabschnitt 25 gemäß der ersten Ausführungsform aufweist.

## Patentansprüche

1. Axialturbomaschine (1) mit einem Laufschaufelgitter, das von Laufschaufeln (2) mit jeweils einer Vorderkante (8) und einer radial außen liegenden, freistehenden Schaufelspitze (15) gebildet ist, und einer das Laufschaufelgitter ummantelnden Ringraumwandung (13) mit einer Ringrauminnenseite (14), mit der die Ringraumwandung (13) unmittelbar benachbart zu den Schaufelspitzen (15) unter Ausbildung eines Radialspalts (16) zwischen der Einhüllenden der Schaufelspitzen (15) und der Ringrauminnenseite (14) angeordnet ist, wobei die Laufschaufeln (2) an ihren Schaufelspitzen (15) im Bereich ihrer Vorderkanten (8) jeweils eine Radialerhebung (18) aufweisen sowie die Ringraumwandung (13) an der Ringrauminnenseite (14) eine umlaufende Radialvertiefung (17) aufweist, die im Radialabstand zu der Einhüllenden der Schaufelspitzen (15) angeordnet ist, so dass entlang der Hauptdurchströmungsrichtung der Axialturbomaschine (1) der Verlauf der Radialerhebungen (18) an deren dem Radialspalt (16) zugewandten Seiten dem Verlauf der Radialvertiefung (17) nachempfunden ist.

2. Axialturbomaschine (1) gemäß Anspruch 1, wobei der Radialabstand der Radialvertiefung (17) zu der Einhüllenden der Schaufelspitzen (15) entlang der Hauptdurchströmungsrichtung der Axialturbomaschine (1) konstant ist.

3. Axialturbomaschine (1) gemäß Anspruch 1 oder 2, wobei jede Laufschaufel (3) an der Schaufelspitze (15) eine Sehnenlänge hat, wobei im Bereich von deren vorderen Hälfte die Radialerhebung (18) und die Radialvertiefung (17) angesiedelt sind.

4. Axialturbomaschine (1) gemäß einem der Ansprüche 1 bis 3, wobei das Maximum der Radialerhebung (18) und der Grund (12) der Radialvertiefung bei 10 % bis 30 %, insbesondere bei 20 %, der Sehnenlänge von der Vorderkante (8) aus gesehen angesiedelt sind.

5. Axialturbomaschine (1) gemäß einem der Ansprüche 1 bis 4, wobei die Radialvertiefung (17) und die Radialerhebungen (18) derart geformt sind, dass entlang der Hauptdurchströmungsrichtung der Axialturbomaschine (1) der Verlauf des Radialspalts (16) im Wesentlichen gleichweit, wellig, kantenfrei und stufenfrei verläuft.

6. Axialturbomaschine (1) gemäß Anspruch 5, wobei in Hauptdurchströmungsrichtung der Axialturbomaschine (1) der Verlauf der Radialvertiefung (17) an der Ringrauminnenseite (14) einen ersten Krümmungsabschnitt (19) und einen sich daran anschließenden zweiten Krümmungsabschnitt (21) aufweist, wobei der erste Krümmungsabschnitt (19) von dem zweiten Krümmungsabschnitt (21) mit einem ersten Wendepunkt (20) abgegrenzt ist, so dass die Krümmungen des ersten Krümmungsabschnitts (19) und des zweiten Krümmungsabschnitts (21) unterschiedliche Vorzeichen haben.

7. Axialturbomaschine (1) gemäß Anspruch 6, wobei in Hauptdurchströmungsrichtung der Axialturbomaschine (1) der Verlauf der Radialvertiefung (17) an der Ringrauminnenseite (14) einen sich an den zweiten Krümmungsabschnitt (21) anschließenden dritten Krümmungsabschnitt (23) und einen sich daran anschließenden vierten Krümmungsabschnitt (25) aufweist, wobei der zweite Krümmungsabschnitt (21) von dem dritten Krümmungsabschnitt (23) mit einem zweiten Wendepunkt (22) und der dritte Krümmungsabschnitt (23) von dem vierten Krümmungsabschnitt (25) mit einem dritten Wendepunkt (24) abgegrenzt ist, so dass die Krümmungsabschnitte (19, 21, 23, 25) jeweils ein sich abwechselndes Vorzeichen haben.

8. Axialturbomaschine (1) gemäß Anspruch 6 oder 7, wobei an wenigstens einem der Wendepunkte (20, 22, 24) der Verlauf eines Abschnitts der Radialvertiefung (17) an der Ringrauminnenseite (14) in Hauptströmungsrichtung der Axialturbomaschine (1) gerade ist.

9. Axialturbomaschine (1) gemäß Anspruch 6, wobei in Hauptdurchströmungsrichtung der Axialturbomaschine (1) der Verlauf der Radialvertiefung (15) an der Ringrauminnenseite (12) einen sich an den Grund (12) der Radialvertiefung anschließenden Konusabschnitt (26) aufweist.

10. Axialturbomaschine (1) gemäß einem der Ansprüche 6 bis 9, wobei in Hauptdurchströmungsrichtung der Axialturbomaschine (1) und von der Vorderkante (8) aus gesehen der erste Wendepunkt (20) bei 5 % bis 15 %, insbesondere bei 10 %, der Profillänge der Laufschaufel (3) und/oder der Grund der Radialvertiefung bei 15 % bis 25 %, insbesondere bei 20 %, der Profillänge der Laufschaufel (3) angesiedelt ist.
